**Europäisches Patentamt**

**European Patent Office**

**Office européen des brevets**

(19)

(11) Veröffentlichungsnummer: **0 108 710**
A2

(12) # EUROPÄISCHE PATENTANMELDUNG

(21) Anmeldenummer: **83810448.7**

(22) Anmeldetag: **03.10.83**

(51) Int. Cl.³: **B 32 B 15/08**

(30) Priorität: **08.10.82 US 433500**

(43) Veröffentlichungstag der Anmeldung:
**16.05.84 Patentblatt 84/20**

(84) Benannte Vertragsstaaten:
**CH DE FR GB LI SE**

(71) Anmelder: **CIBA-GEIGY AG**
**Postfach**
**CH-4002 Basel(CH)**

(72) Erfinder: **Hurley, John L.**
**234 Miller Road**
**Mahwah New Jersey 07430(US)**

(54) **Laminate aus Metallplatten und thermoplastischem Material.**

(57) Laminate aus Metallplatten und einem thermoplastischen Verbindungsmaterial sind dadurch gekennzeichnet, dass das thermoplastische Verbindungsmaterial ein oder mehrere Propylen-Copolymere mit mindestens 60 Gew.-% an Propylen und kleinere Mengen an Aethylen und einer, α,β-ungesättigten Carbonsäure enthält. Das Verbindungsmaterial kann auch Mischungen der genannten Copolymeren und kleinere Mengen eines Polyolefins enthalten, so dass 0,8 bis 10 Gew.-% α,β-ungesättigte Carbonsäure und 2 bis 25 Gew.-% Aethylen vorhanden sind.

Die Laminate können zusätzlich eine thermoplastische Innenlage enthalten, worin die Innenlage Polypropylen oder ein Propylen-Aethylen-Copolymer mit höchstens 30 Gew.-% Aethylen oder ein Gemisch solcher Materialien mit höchstens 15 Gew.-% eines Elastomeren enthält.

- 1 -

CIBA-GEIGY AG                    3-14139
Basel (Schweiz)


Laminate aus Metallplatten und thermoplastischem Material

Die vorliegende Erfindung betrifft Laminate aus Metallplatten mit
thermoplastischem Material dazwischen, wobei letzteres ein modifiziertes thermoplastisches Material auf der Basis von Propylen ist.
Dieses modifizierte Propylen ermöglicht eine ausreichende Haftung
zwischen dem Metall und dem thermoplastischen Material.

Die Verbindung von Metallplatten mit Kunststoffen zu Laminaten des
Sandwich-Typs ist von besonderem technischem Interesse. Dünne
Laminate aus Stahlplatten und thermoplastischem Material können
ebenso einfach wie die herkömmlichen Stahlplatten geformt werden,
sind jedoch wesentlich leichter. Das Gewicht kann durch Verwendung
von Aluminium in solchen Laminaten weiter gesenkt werden.

Polyolefine sind insofern von Bedeutung, als sie ein niedriges
spezifisches Gewicht und niedrige Kosten mit hoher Beständigkeit
gegen Wasser und Korrosion in sich vereinen. Das Hauptproblem bei
der Verwendung von Polyolefinen in Metall-Kunststoff-Laminaten
bleibt jedoch die geringe Haftung zwischen Polyolefin und Metall.
Zur Erhöhung der Haftung wurde eine Reihe von Massnahmen vorgeschlagen, so zum Beispiel das Vorbehandeln der Metalloberfläche
durch Aufrauhen, Aetzen, Ueberziehen oder Oxydieren und/oder das
Vorbehandeln oder die Modifizierung des Polyolefins. Zur Erhöhung
der Haftung zwischen Polyolefin und Metall wurde vorgeschlagen,
polare Gruppen in das Polyolefin einzuführen. So zum Beispiel wird
in US 3 320 115 phosphoryliertes Polypropylen als verbindende
Zwischenschicht zwischen einem Metall und einer Polyolefin-Ummantelung verwendet. US 3 515 615 lehrt, dass die Bestrahlung von
Polyolefinplatten mit kurzwelligem UV-Licht in Gegenwart von

- 2 -

Sauerstoff die Bindungsstärke zwischen Metall und Polyolefin erhöht. Gemäss US 3 928 687 wird Polypropylen durch Umsetzung mit ungesättigten cyclischen Dicarbonsäuren oder deren Anhydriden in Gegenwart von radikalischen Katalysatoren modifiziert und so die Haftung auf anorganischen Fasern und Metallen erhöht. US 4 172 912 beschreibt ein Verfahren zum Ueberziehen von Stahl mit Polyolefin, wobei eine Zwischenschicht aus einem sulfochlorierten Polyolefin verwendet wird.

Diese Vorschläge wurden jedoch nicht im technischen Massstab zur Herstellung von Metall-Polyolefin-Laminaten verwirklicht. Einer der Gründe dafür ist, dass einige der vorgeschlagenen, mit polaren Gruppen modifizierten Materialien sehr teuer sind. Ein anderer Grund ist, dass durch die Polarisierung des Polyolefins die Beständigkeit der Polyolefin-Metall-Bindung gegenüber Wasser abnimmt. Die Modifikation des Polyolefins kann ferner zu Laminaten führen, die schlecht verformbar sind.

Zur Zeit sind die technischen und kommerziellen Probleme, die sich aus der Verwendung von Polyolefinen in Metall-Kunststoff-Laminaten ergeben, noch weitgehend ungelöst. Es darf noch hinzugefügt werden, dass die Probleme nicht nur die Wahl geeigneter Metalloberflächen und geeigneter polarer Gruppen betreffen, sondern auch den Einfluss der physikalisch-mechanischen Eigenschaften des thermoplastischen Materials, da die Haftung nicht ausschliesslich ein chemisches Problem ist.

Es wurde nun gefunden, dass Metall-Polyolefin-Laminate mit ausgezeichneten Eigenschaften erhalten werden können, wenn man das erfindungsgemässe thermoplastische Material auf der Basis von Polypropylen als Verbindungsschicht zwischen Metallplatten oder zwischen einer Innenlage auf Polypropylen-Grundlage und einer Metallplatte verwendet. Die Erfindung betrifft demnach Laminate, die zwei oder mehrere Metallplatten und Zwischenschichten aus thermoplastischem Material enthalten, worin die thermoplastische Zwischenschicht entweder

A. aus einer homogenen Verbindungsschicht besteht, welche ein
Propylen-Copolymer mit mindestens 60 Gew.-% Propylen und kleinere
Mengen Aethylen und/oder einer α,ß-ungesättigten Carbonsäure in
copolymerisierter Form oder ein Gemisch aus zwei oder mehreren
solchen Copolymeren mit einem geringen Anteil an einem Polyolefin
enthält, und zwar in der Weise, dass in der entstandenen Verbindungsschicht 0,8 bis 10 Gew.-% einer copolymerisierten α,ß-ungesättigten Carbonsäure und 2 bis 25 Gew.-% polymerisiertes
Aethylen vorhanden sind, oder

B. aus einer Innenlage und Verbindungsschichten besteht, wobei die
Innenlage Polypropylen oder ein Propylen-Aethylen-Copolymer mit
höchstens 30 Gew.-% Aethylen oder deren Gemische mit höchstens 15
Gew.-% eines Elastomeren enthält, die Verbindungsschichten
zwischen der Innenlage und den Metallplatten liegen und die
Verbindungsschichten der Definition in A. entsprechen.

Die thermoplastische Zwischenschicht kann ferner Füllstoffe,
Verstärkungsmittel oder andere in der Polyolefinverarbeitung übliche
Zusätze enthalten.

Gegenstand der vorliegenden Erfindung sind daher Laminate enthaltend
zwei oder mehrere Metallplatten mit je einer thermoplastischen
Schicht dazwischen, wodurch jeweils zwei benachbarte Metallplatten
miteinander verbunden werden, dadurch gekennzeichnet, dass die
thermoplastische Schicht

a) eine Mischung aus einem Propylen-Aethylen-Copolymer und einem
Propylen-α,ß ungesättigten Carbonsäure-Copolymer, oder

b) ein Propylen-Aethylen-α,ß ungesättigtes Carbonsäure-Terpolymer,
oder

c) eine Mischung aus einem oder mehreren der unter a) definierten
Copolymeren und einem Terpolymer b), oder

- 4 -

d) eine Mischung aus einem oder mehreren Polymeren wie unter a) bis
   c) genannt und einem Polyolefin enthält,

wobei in der thermoplastischen Schicht mindestens 60 Gew.-% Propylen, 2 bis 25 Gew.-% Aethylen und 0,8 bis 10 Gew.-% α,β-ungesättigte
Carbonsäure vorhanden sind.

Ebenfalls Gegenstand der vorliegenden Erfindung sind Laminate
enthaltend zwei oder mehrere Metallplatten mit mindestens einer
thermoplastischen Innenlage und einer thermoplastischen Schicht
dazwischen, wobei durch letztere

> (i) jeweils eine Metallplatte mit einer benachbarten
>      thermoplastischen Innenlage und
> (ii) jeweils zwei benachbarte Metallplatten miteinander
>      verbunden werden,

worin die thermoplastische Schicht der zuvor gegebenen Definition
entspricht, dadurch gekennzeichnet, dass die thermoplastische
Innenlage

> (1) ein Polypropylen, oder
> (2) ein Propylen-Aethylen-Copolymer mit höchstens 30 Gew.-%
>      Anteil an Aethylen, oder
> (3) eine Mischung der Polymere (1) und (2), oder
> (4) eine Mischung aus einem oder mehreren Polymeren wie unter
>      (1) bis (3) genannt und höchstens 15 Gew.-% eines
>      Elastomeren enthält,

wobei die thermoplastische Innenlage 10 bis 90% der Gesamtdicke des
Laminates ausmacht.

Die Metallplatten, welche in den Laminaten verwendet werden, können
aus einem beliebigen Metall oder aus einer Legierung bestehen.
Bevorzugt verwendet man Metallplatten, die aus Eisen, Stahl,
Aluminium, Kupfer, Nickel oder Messing bestehen.

- 5 -

Zwecks Erhöhung der Verbindungsstärke zwischen Metall und thermoplastischem Material werden die Platten vorteilhafterweise vorbehandelt, in dem man sie entweder mit einem organischen Lösungsmittel entfettet oder mit einer Mineralsäure ätzt. Eine weitere bevorzugte Methode zur Erhöhung der Verbindungsstärke besteht darin, dass man die Metallplatten mit Chromsäure ätzt oder mit einer Chrom/Chromoxid-Schicht überzieht. Solche Verfahren sind beispielsweise in US 3 455 775 und US 3 679 513 beschrieben. Die Chrom- oder Chromoxidschicht kann sehr dünn sein und doch eine deutliche Erhöhung der Bindungsstärke bewirken. Vorzugsweise weist der Ueberzug eine Dicke von 0,01 bis 0,05µ auf.

Bevorzugt verwendet man erfindungsgemäss Aluminiumplatten, welche durch Aetzen, Elektroplattieren oder Eloxieren in einem Chrombad vorbehandelt wurden, oder man verwendet Stahlplatten, welche in einem Chrombad elektroplattiert wurden. Für die Vorbehandlung geeignete Chrombäder sind wässrige Lösungen des Chrom(VI)oxids. Sie werden beispielsweise so hergestellt, dass man Chrom(VI)oxid ($CrO_3$) oder das Chromat oder Dichromat eines Alkalimetalls in verdünnter $H_2SO_4$ auflöst. Die Verfahren zum Elektroplattieren von Metallplatten und Eloxieren von Aluminium sind bekannt. Das Vorbehandeln mit Chrom ist auch für andere Metallplatten, wie z.B. für Kupfer- und Nickelplatten, vorteilhaft. Falls man Stahlplatten verwendet, welche grössere Mengen an Chrom enthalten, dass heisst etwa 10 bis 24 Gew.-%, dann ist die Bindungsstärke zum thermoplastischen Material ebenfalls bedeutend höher, als wenn man chromfreien Stahl verwendet. In diesem letzteren Fall ist die Vorbehandlung mit Chrom von geringerer Bedeutung. Zusammenfassend darf gesagt werden, dass acuh bei Verwendung von nicht mit Chrom vorbehandelten Metallplatten Laminate mit befriedigenden Eigenschaften hergestellt werden können, die Vorbehandlung mit Chrom jedoch die Bindungsstärke erhöht und daher bevorzugt ist.

Die thermoplastische Zwischenschicht des Laminates (im weiteren als "Zwischenschicht" bezeichnet) enthält entweder eine homogene Verbindungsschicht, wie unter (A) beschrieben oder besteht aus einer

- 6 -

Innenlage auf Polypropylen-Grundlage und den Verbindungsschichten gemäss (A), wobei letztere zwischen der Innenlage und den Metallplatten liegen. Die Wahl der jeweiligen Varianten hängt von der gewünschten Dicke des Laminates und von dessen Verwendungszweck ab. In beiden Typen ist die Zwischenschicht (A) primär für die Bindungsstärke verantwortlich, obwohl je nach Qualität der Innenlage die Bindungsstärke ebenfalls deutlich beeinflusst werden kann.

Die verbindenden Zwischenschichten (A) können insbesondere aus einem Propylen-Aethylen-Carbonsäure-Terpolymer mit den gewünschten Gewichtsverhältnissen der Komponenten bestehen. In der Praxis ist es aber leichter, die gewünschten Komponentenverhältnisse durch Mischen von verschiedenen Polymeren zu erreichen. In diesem Fall ist das thermoplastische Material (A) eine Polymermischung mit hohem Propylengehalt. Solche Mischungen können beispielsweise aus zwei oder mehreren verschiedenen Propylen-Copolymeren oder aus einem oder mehreren Propylen-Copolymeren mit einer kleinen Menge Polyolefin bestehen.

Als Beispiele von $\alpha,\beta$-ungesättigten Carbonsäuren, welche als Comonomere in solchen Propylen-Copolymeren verwendet werden können, seien genannt: Acrylsäure, Methacrylsäure, Crotonsäure, Maleinsäure, Fumarsäure oder Monoester der Malein- oder Fumarsäure. Acrylsäure enthaltende Copolymere sind bevorzugt. Derartige Propylen-Copolymere sind im Handel erhältlich oder können nach an sich bekannten Copolymerisationsverfahren hergestellt werden.

Bevorzugtes Polyolefin ist das Polypropylen, obwohl auch andere Polyolefine, wie z.B. Poläthylen, Polybutylen, Polyisobutylen oder Polymethylpenten, verwendet werden können. Das Polyolefin kann den Propylen-Copolymeren oder deren Gemischen in kleinen Mengen zugefügt werden, um so das gewünschte Verhältnis von Aethylen- und COOH-Gruppen sowie die physikalisch-mechanischen Eigenschaften der Schicht (A) zu erreichen. Man kann bis zu 40 Gew.-% Polyolefin, bezogen auf das Gesamtgewicht des Polymeren, zufügen, so dass das Propylen-Copolymer den Hauptanteil der Schicht (A) darstellt.

Erfindungsgemäss ist die gleichzeitigen Gegenwart von Aethylen- und Carboxylgruppen in der Schicht (A) von besonderer Bedeutung. Falls nur einer dieser Comonomeren vorhanden ist, so führt das zu einer wesentlichen Senkung der Bindungsstärke. Ein von den definitionsgemässen Mengen abweichender Anteil der Comonomeren könnte sich nachteilig auswirken, so zum Beispiel bewirkt zuviel Aethylen eine Erweichung, und bei zuviuel Carboxylgruppen wird die Zähigkeit beeinträchtigt.

Auf jeden Fall rechtfertigt aber eine allenfalls erzielbare weitere Verbesserung der Eigenschaften die höheren Materialkosten nicht. Die Rolle, welche die Carboxylgruppen spielen, dürfte in der Chemie der Metall-Polyolefin-Haftung zu suchen sein. Die Rolle der Aethylengruppen ist nicht ganz klar, doch könnte sie den physikalischen Teil der Haftung betreffen. Der Aethylengehalt beeinflusst die Zähigkeit des Copolymeren und die Fliessfähigkeit der heissen Schmelze, also Charakteristiken, welche möglicherweise die Haftung beeinflussen.

Ueberraschenderweise wurde nun gefunden, dass die gleichzeitige Gegenwart beider Comonomeren nicht nur die Bindungsstärke, sondern auch die Stabilität der Bindungen im Laminat gegenüber Feuchtigkeit erhöht. Diese Eigenschaft ist sehr wertvoll, insbesondere wenn die Laminate im Freien verwendet werden, wie zum Beispiel als Paneele für Transportmittel oder Aussenwandverkleidungen an Gebäuden, wo die Witterungsbeständigkeit eine grosse Rolle spielt. Die erfindungsgemässen Laminate bieten nun diese gewünschte Vielseitigkeit in der Anwendung, indem sie ausgezeichnete Beständigkeit gegenüber Wasser und Korrosion aufweisen.

Ein bevorzugtes Material für die Schicht (A) sind Gemische aus einem Propylen-Acrylsäure-Copolymer und einem Propylen-Aethylen-Copolymer oder Mischungen dieser Gemische mit Polypropylen. Das Propylen-Acrylsäure-Copolymer kann 2 bis 10 Gew.-%, vorzugsweise 5 bis 8 Gew.-%, copolymerisierte Acrylsäure enthalten. Das Propylen-Aethylen-Copolymer kann 5 bis 35 Gew.-%, vorzugsweise 6 bis 30

- 8 -

Gew.-%, copolymerisiertes Aethylen enthalten. Durch Vermischen der geeigneten Mengen beider Copolymere mit Polypropylen erhält man den gewünschten Gehalt an Aethylen und Carboxylgruppen in dem Gemisch.

Ein weiteres bevorzugtes Material für die Schicht (A) ist ein Propylen-Aethylen-Acrylsäure-Terpolymer oder dessen Gemische mit Polypropylen, mit einem Propylen-Aethylen-Copolymer oder mit einem Propylen-Acrylsäure-Copolymer. Das Terpolymer kann 2 bis 10 Gew.-% Acrylsäure und 5 bis 30 Gew.-% Aethylen enthalten und kann so mit Polypropylen oder mit einem Propylen-Copolymer gemischt werden, dass die gewünschten Verhältnisse von Aethylen- und Carboxylgruppen in der Verbindungsschicht vorliegen.

Enthält das Laminat eine thermoplastische Innenlage zwischen den verbindenden Schichten, so kann das Material der Innenlage aus Polypropylen oder vorzugsweise aus einem Propylen-Aethylen-Copolymer mit nicht mehr als 30 Gew.-% Aethylen, oder aus einer Mischung der beiden Materialien bestehen. Die Innenlage kann ferner bis zu 15 Gew.-% eines Elastomeren enthalten. Letzteres kann ein natürliches oder synthetisches elastomeres Material sein, wie z.B. Polybutadien, Polyisopren, Styrol-Butadien-Kautschuk, Butyl-Kautschuk, Aethylen-Propylen-Dien-Terpolymerkautschuk oder natürlicher Kautschuk. Ein solcher Zusatz bewirkt eine gewisse Erhöhung der Zähigkeit des Materials auf Polypropylen-Grundlage. Der Hauptbestandteil der Innenlage ist Polypropylen. Die Dicke der Innenlage kann zwischen 10 bis 90%, bezogen auf die Gesamtdicke des Laminates, variieren und liegt zweckmässig bei 50%. Für gewisse Anwendungszwecke kann die Innenlage auch geschäumt werden. Laminate mit geschäumter Innenlage haben den Vorteil eines niedrigen spezifischen Gewichts und besserer thermischer und akustischer Isolation. Das Verschäumen setzt jedoch die Scherfestigkeit zwischen den Metallplatten herunter. Das Verschäumen der Innenlage kann nach den für das Schäumen von Polypropylen bekannten Methoden erfolgen. Geschäumte Polypropylenplatten sind im Handel erhältlich.

- 9 -

Das thermoplastische Material der Innenlage sowie der verbindenden Schichten kann Füllmittel, wie z.B. Talk, Calciumcarbonat oder Tonerde, Verstärkungsmittel, wie z.B. Glasfasern, Kohlenstoffasern oder Glimmer, Stabilisatoren, wie z.B. Antioxidantien, Lichtstabilisatoren oder Metalldesaktivatoren, oder andere in der Polypropylenverarbeitung übliche Zusätze enthalten. Von besonderer Bedeutung ist der Zusatz von elektrisch leitendem Russ in Mengen von 30 bis 40 Gew.-% bezogen auf das Endprodukt. Auf diese Weise gelangt man zu Laminaten mit hoher elektrischer Leitfähigkeit in der Ebene der Metallplatten und mit niedriger bis mittlerer Leitfähigkeit senkrecht zu dieser Ebene. Solche Laminate finden Verwendung in elektrischen Anlagen, wie z.B. Heizapparate, Schalter oder Batterien.

Die erfindungsgemässen Laminate können nach bekannten Methoden zur Herstellung von Metall-Kunststoff-Laminaten hergestellt werden.

Eines der geeignetsten Verfahren ist die Bildung von sogenannten Sandwiches aus Metallplatten und Polymerfilmen und Heisskleben des Sandwiches bei einer Temperatur und bei einem Druck, bei denen das Polymer erweicht. Jedes thermoplastische Material hat einen Temperaturbereich, innerhalb dessen das Material verformbar wird, bevor es in eine flüssige Schmelze übergeht. Für die erfindungsgemässen Laminate wird der Temperaturbereich von 180-210°C empfohlen, falls man einen Druck von etwa 1,96-9,81 MPa anwendet. Die optimale Temperatur sollte auf Grund des jeweiligen thermoplastischen Materials und der Laminatdicke gewählt werden.

Die Dauer des Heissklebens hängt von der Grösse und Heizkapazität der Presse ab. Es ist von Vorteil, das Laminat nicht mit vollem Druck zu pressen, solange das thermoplastische Material noch kalt ist. Das Laminat sollte sich vielmehr zuerst in der heissen Presse für eine Weile unter niedrigem Druck aufwärmen, bevor es dem vollen Druck ausgesetzt wird. Das Laminat kann langsam in der gleichen Presse abgekühlt oder in eine Kühlpresse gelegt werden. Mit dem beschriebenen Verfahren des Heissklebens können Laminate aus vielen Schichten mühelos in einem Schritt hergestellt werden.

Wird das Verfahren kontinuierlich ausgeführt, so kann das Polymer in Form einer Schmelze vom Extruder auf die Metallplatte gebracht werden und der Verbundstoff (Sandwich) kann zwischen kalten Walzen gepresst werden. Das Polymer kann andererseits auch in Pulverform auf das Metall gebracht werden. Der Verbundstoff wird dann mit heissen Walzen gepresst und anschliessend zwischen kalten Walzen abgekühlt.

Die einfachsten Laminattypen sind diejenigen, worin zwei Metallplatten mit einer dünnen thermoplastischen Schicht miteinander verbunden sind. Ist auch eine Innenlage zwischen zwei thermoplastischen Schichten vorhanden, so enthält das Laminat fünf Schichten. Das Laminat kann aber auch drei und mehr Metallplatten mit thermoplastischen Schichten und Innenlagen dazwischen enthalten, so dass das Laminat aus einer Vielzahl von Schichten besteht. In solchen Systemen können die Metallplatten aus verschiedenen Metallen sein. So kann zum Beispiel ein Kern aus Stahl-Polymer-Stahl-Laminat mit zwei dünnen Aluminiumplatten verkleidet werden, um den Stahl vor Korrosion zu schützen. Die jeweilige Konstruktion der Laminate wird in erster Linie von dem Endgebrauch abhängen.

Laminate können anstelle von Metallplatten eingesetzt werden, wann immer eine Reduktion des Gewichts erwünscht ist. Dies kann zum Beispiel in der Konstruktion von Transportcontainern, bei Lastwagen- und Anhängerkarosserien, Autokarosserien, Flugzeug- und Eisenbahnwänden, Aussenwandverkleidungen für Gebäude, Gerätegehäusen, anderen mechanischen Konstruktionen usw. vorkommen.

Weitere Vorteile der Laminate gegenüber Metallplatten sind ihre leichtere Verformbarkeit während der Verarbeitung sowie verbesserte thermische und akustische Isolierungseigenschaften. Einen weiteren Gewinn bedeutet die Möglichkeit, dass man die Eigenschaften von zwei verschiedenen Metallen in einem Laminat vereinen kann, wie zum Beispiel die grosse Steifheit von Stahl mit den dekorativen und antikorrosiven Eigenschaften des Aluminiums. Solche Systeme können

- 11 -

zum Beispiel für die Konstruktion von Automobilstossstangen hergestellt aus einem Laminat, das aus einem extrem starken Stahlkern und
einer dünnen Aluminiumverkleidung besteht, verwendet werden.

Ein anderes spezielles Anwendungsgebiet betrifft die Herstellung von
elektrischen Geräten. Da die Polyolefin-Innenlage normalerweise ein
elektrischer Isolator ist, können die Laminate zum Beispiel als
elektrische Kondensatoren verwendet werden. Wenn die Polyolefin-
Innenlage mit elektrisch leitendem Material gefüllt ist, wie zum
Beispiel mit Russ, stellen die Laminate zwei-dimensionale Materialien mit verschiedenen elektrischen Leitfähigkeiten in der Ebene des
Laminates und in der Ebene senkrecht dazu dar. Solche Systeme können
in Widerständen und Batterien verwendet werden.

Die nachfolgenden Beispiele illustrieren die Erfindung durch einige
spezifische Ausführungen. Teile und Prozente sind, falls nicht
anders angegeben, Gewichtsteile und -prozente.

Beispiel 1: Stahl-Polyolefin-Stahl-Laminate werden aus handelsüblichen 0,2 mm dicken verchromten Stahlplatten und aus einer Polypropylen-Zwischenschicht hergestellt, wobei letztere durch Copolymerisieren mit Aethylen und Acrylsäure sowie mit deren Gemischen
modifiziert. Die hier verwendeten Polymere sind:

I = Propylen-Copolymer mit 6 Gew.-% Acrylsäure
II = Propylen-Copolymer mit 6 Gew.-% Acrylsäure und
    19 Gew.-% Aethylen.

Die Polymermischungen werden durch Mischen der Copolymere bei
210°C in einem Extruder erhalten. Anschliessend werden sie durch
eine Sechs-Loch-Strangdüse extrudiert, und die extrudierten Stränge
werden granuliert.

Die Laminatprobestücke werden mittels eines 1,5 mm hohen Abstandhalterahmens aus Stahl hergestellt. Die Probestücke messen 20 x 20
cm. Die untere Stahlplatte wird bis zur Rahmenhöhe mit Polymergranulat bedeckt und mit der oberen Stahlplatte abgedeckt. Der Rahmen mit dem Probestück wird zwischen zwei 8 mm dicke Stahlplatten gelegt.

Das ganze Gefüge wird in einer auf 204°C vorgeheitzten Plattenpress während 30 Sekunden mit einem Druck von 1360,8 kg und anschliessend während weiteren 30 Sekunden mit einem Druck von 9072 kg gepresst. Anschliessend wird das Probestück zu eine in Kühlpresse gebracht, wo es während 5 Minuten unter einem Druck von 9072 kg gehalten wird. Die erhaltenen Laminatprobestücke weisen eine Gesamtdicke von etwa 1,5 mm auf. Dementsprechend beträgt die Dicke der Polymerschicht etwa 1,1 mm.

Die Laminatprobestücke werden auf Abreissfestigkeit der Metall-Polymer-Bindung in einem Instron Zugversuchsgerät geprüft. Dieser 180° Test wird mit 1,27 cm breiten Proben und mit einer Kreuzkopfgeschwindigkeit von 2,54 cm/Minute durchgeführt.

Die folgenden Kürzzeit-Prüfungen werden zur Bestimmung der Empfindlichkeit gegenüber Feuchtigkeit durchgeführt:

a) Ein Probestück wird 168 Stunden in einer kochenden, 5%-igen NaCl-Lösung in destilliertem Wasser gehalten.

b) Ein Probestück wird während 31 Tagen bei Raumtemperatur in Leitungwasser gehalten.

Die Probestücke werden dann erneut auf die zuvor beschriebene Abreissfestigkeit geprüft. Die verschiedenen Polymere und Polymermischungen haben denselben Acrylsäuregehalt und unterscheiden sich nur in ihrem Aethylengehalt. Die Ergebnisse sind in Tabelle 1 zusammengefasst.

TABELLE 1

| Polymermischung aus I II (Gew.-%) | | Gehalt an Aethylen (Gew.-%) | Gehalt an Acrylsäure (Gew.-%) | Abreissfestigkeit (N) | | |
|---|---|---|---|---|---|---|
| | | | | nach dem Laminieren | nach 168 Stunden in kochender NaCl-Lösung | nach 31 Tagen in Leitungs- wasser |
| 75 | 25 | 4,8 | 6 | 190,5 | 129,1 | 166,4 |
| 50 | 50 | 9,5 | 6 | 248,3 | 218,1 | 251,0 |
| 25 | 75 | 14,3 | 6 | 284,4 | 235,4 | 293,0 |
| – | 100 | 19,0 | 6 | 294,6 | 275,4 | 319,1 |

0108710

- 14 -

Wie die Ergebnisse zeigen, wird mit zunehmendem Aethylengehalt die
Bindung stärker, und die Empfindlichkeit gegenüber Feuchtigkeit
nimmt ab.

Beispiel 2: Stahl-Polyolefin-Stahl-Laminate werden hergestellt,
wobei die Polyolefinschicht aus einer Polypropylen-Innenlage
(modifiziert mit 7,5 Gew.-% Aethylen) und aus zwei Zwischenschichten
des Polymergemisches I und II (vgl. Beispiel 1) besteht.

Die Stahlplatten sind im Handel erhältliche, verschromte, 0,2 mm
dicke Platten. Die Probestücke messen 20 x 20 cm. Die Polypropylen-
Innenlage ist 1,5 mm dick. Die 0,2 mm dicken Verbindungsfilme werden
durch Folienblasen des in Tabelle 2 aufgeführten Polymergemisches
hergestellt. Das Laminat wird dadurch hergestellt, dass man den
Verbundstoff in einem 1,9 mm hohen Stahlrahmen bei einer Temperatur
von 204°C heisspresst. Die Press- und Testverfahren entsprechen dem
Vorgehen im Beispiel 1. Die Ergebnisse sind in Tabelle 2 zusammengefasst.

TABELLE 2

| Polymermischung aus | | Gehalt an Aethylen (Gew.-%) | Gehalt an Acrylsäure (Gew.-%) | Abreissfestigkeit (N) | | |
|---|---|---|---|---|---|---|
| I (Gew.-%) | II | | | nach dem Laminieren | nach 168 Stunden in kochender NaCl-Lösung | nach 31 Tagen in Leitungswasser |
| 75 | 25 | 4,8 | 6 | 178,9 | 69,4 | 155,3 |
| 50 | 50 | 9,5 | 6 | 316,0 | 247,4 | 353,8 |
| – | 100 | 19,0 | 6 | 273,2 | 178,4 | 327,5 |

– 15 –

0108710

Diese Resultate bestätigen die Ergebnisse in Tabelle 1, nämlich, dass gute Bindungsstärken erhalten werden, wenn die Propylencopolymere die vorgeschriebene Menge Acrylsäure und Aethylen enthalten.

Die gleiche Serie von Laminaten wird hergestellt, wobei man jedoch eine 0,1 mm dicke Zwischenschicht anstelle einer 0,2 mm dicken Schicht verwendet. Die erhaltenen Laminate weisen mit den oben angegebenen Bindungsstärken vergleichbare Resultate auf.

Ein weiteres Laminat wird aus einer Polypropylen-Homopolymer-Innenlage und einer Zwischenschicht aus einem 50:50 Polymergemisch aus I und II (9,5 Gew.-% Aethylen, 6 Gew.-% Acrylsäure) hergestellt. Die Abreissfestigkeit dieses Laminates beträgt 244,8 N nach dem Laminieren und 133,5 N nach 168 Stunden Lagerung in kochender NaCl-Lösung. Diese Ergebnisse beweisen, dass ausschliesslich aus Polypropylen hergestellten Innenlagen, für die Verwendung in den erfindungsgemässen Laminaten geeignet sind, obwohl die leicht reduzierte Bindungsstärke Innenlagen aus modifiziertem Polypropylen vorteilhafter erscheinen lässt.

Beispiel 3: Stahl-Polyolefin-Stahl-Laminate werden in gleicher Weise wie in Beispiel 1 hergestellt. Die Polyolefine sind Gemische aus den Polypropylen-Copolymeren I bis IV und aus Polypropylen V.

I.: Propylen-Copolymer mit 6% Acrylsäure
II.: Propylen-Copolymer mit 6% Acrylsäure und 19% Aethylen
III.: Propylen-Copolymer mit 7,5% Aethylen
IV.: Propylen-Copolymer mit 25% Aethylen
V.: unmodifiziertes Polypropylen.

Die Laminate werden auf Abreissfestigkeit, wie in Beispiel 1 beschrieben, geprüft. In der ersten Serie wird der Acrylsäuregehalt variiert, während der Aethylengehalt mit 9,5% konstant bleibt.

TABELLE 3

| Polymermischung aus I II III IV V (Gew.-%) | Gehalt an Aethylen (Gew.-%) | Gehalt an Acrylsäure (Gew.-%) | Abreissfestigkeit (N) | | |
|---|---|---|---|---|---|
| | | | nach dem Laminieren | nach 168 Stunden in kochender NaCl-Lösung | nach 31 Tagen in Leitungs- wasser |
| 50  50  –  –  – | 9,5 | 6 | 259,9 | 230,9 | 236,0 |
| 17  50  –  –  33 | 9,5 | 4 | 304,8 | 189,1 | 244,8 |
| 33  –  –  38  29 | 9,5 | 2 | 220,7 | 121,9 | 190,0 |
| –  17  83  –  – | 9,5 | 1 | 200,3 | 124,6 | 164,7 |

- 17 -

- 18 -

In einer zweiten Serie wird der Aethylengehalt bei einem relativ niedrigen Acrylsäuregehalt von 2% variiert. Die Ergebnisse betreffend der Bindungsstärke sind in Tabelle 4 zusammengefasst.

TABELLE 4

| Polymermischung aus I II III IV (Gew.-%) | | | | Gehalt an Aethylen (Gew.-%) | Gehalt an Acrylsäure (Gew.-%) | Abreissfestigkeit (N) | | |
|---|---|---|---|---|---|---|---|---|
| | | | | | | nach dem Laminieren | nach 168 Stunden in kochender NaCl-Lösung | nach 31 Tagen in Leitungs- wasser |
| 33 | – | 67 | – | 16,7 | 2 | 177,1 | 124,6 | 167,3 |
| 33 | – | 38 | 29 | 9,5 | 2 | 220,7 | 121,9 | 190,0 |
| 33 | 67 | – | – | 4,7 | 2 | 184,2 | 97,9 | 164,7 |

- 20 -

Wieder einmal ist ersichtlich, dass die Bindungsstärke stark
abnimmt, wenn die Polymermischung frei von Aethylen ist.

Beispiel 4: Aluminium-Polyolefin-Aluminium-Laminate werden hergestellt, worin die Polyolefinschicht aus einer Polyolefin-Innenlage
und zwei Zwischenschichten besteht. Die Polypropylen-Innenlage ist
ein 1,3 mm dicker Film aus einem Propylen-Copolymer mit 7,5%
Aethylen. Die Zwischenschichten sind 0,1 mm dicke Filme, hergestellt
aus einem 50:50 Polymergemisch aus I und II. Diese Filme enthalten
6% Acrylsäure und 9,5% Aethylen.

Die 0,12 mm dicken Aluminiumplatten werden vorbehandelt. Man ätzt
sie zuerst mit 10%iger Phosphorsäure während 40 Sekunden. Anschliessend werden mehrere Platten in einem Chrombad aus 250 g/l $CrO_3$ und
25 g/l $H_2SO_4$ bei 43°C 150 Sekunden lang geätzt. Andere Platten
werden in demselben Chrombad bei 43°C während 150 Sekunden bei einer
Stromdichte von $7,8 \cdot 10^{-2}$ Ampère/$cm^2$ elektroplattiert. Eine dritte
Gruppe wird auf die gleiche Weise bei einer Stromdichte von 0,39
Ampère/$cm^2$ elektroplattiert. Eine vierte Gruppe wird im gleichen
Chrombad während 150 Sekunden bei einer Spannung von 8 V eloxiert.

Das Laminieren wird wie in Beispiel 2 beschrieben unter Verwendung
eines 1,3 mm hohen Rahmens durchgeführt. Der Presszyklus beträgt je
30 Sekunden bei 362,9 kg und 3991,7 kg bei 204°C. Das erhaltene
Laminat weist eine Gesamtdicke von 1,6 mm auf und es wird auf die
gleiche Weise getestet wie in den vorangehenden Beispielen. Die
Ergebnisse sind in Tabelle 5 zusammengefasst.

0108710

- 21 -

TABELLE 5

| Vorbehandlung der Aluminium-platten mit Chrom | Abreissfestigkeit (N) | | |
|---|---|---|---|
| | nach dem Laminie-ren | nach 168 Stunden in kochender NaCl-Lösung | nach 31 Tagen in Leitungs-wasser |
| keine | 3,6 | Bruch | Bruch |
| Aetzen; 150 Sekunden | 227,8 | 204,3 | 216,7 |
| Elektorplattieren bei $7,8 \cdot 10^{-2}$ Ampère/$cm^2$ | 227,0 | 183,3 | 210,0 |
| Elektroplattieren bei 0,39 Ampère/$cm^2$ | 223,0 | 199,8 | 210,5 |
| Eloxieren bei 8 V | 227,0 | 204,7 | 206,9 |

Diese Ergebnisse veranschaulichen, dass eine Chrom-Vorbehandlung notwendig sein kann, um eine zufriedenstellende Bindung zwischen der Polyolefin-Zwischenschicht und den Aluminiumplatten zu erreichen. Eine Vorbehandlung ausschliesslich mit Phosphorsäure ist unzureichend, ebenso die Vorbehandlung mit Schwefelsäure ohne $CrO_3$.

Wenn man andererseits Zwischenschichten mit höherem Aethylengehalt verwendet (19% Aethylen, 6% Acrylsäure), bewirkt das Aetzen mit Schwefelsäure ohne Chromvorbehandlung eine zufriedenstellende Bindungsstärke (Abreissfestigkeit: 182,0 N).

- 22 -

Beispiel 5: Ein Laminat wird.hergestellt, das aus einer Aluminium-Aussenplatte, Zwischenschicht, Stahlplatte, Zwischenschicht, Polypropylen-Innenlage, Zwischenschicht, Stahlplatte, Zwischenschicht und Aluminium-Aussenplatte besteht.

Die folgenden Materialien werden verwendet:

Aluminiumplatten: 0,12 mm dicke Platten, welche gemäss Beispiel 4 einer Vorbehandlung durch Aetzen mit Chromsäure unterworfen werden.

Stahlplatten: 0,2 mm dicke, handelsübliche verchromte Stahlplatten.

Propylen-Innenlage: 1,3 mm dicke Platten aus Propylen-Copolymer, welches 7,5% Aethylen enthält.

Zwischenschichten: 0,1 mm dicker Film, der aus einem 50:50 Gemisch der Propylen-Copolymere I und II hergestellt wird und 6% Acrylsäure sowie 9,5% Aethylen enthält.

Rahmengrösse: 14 x 14 x 0,13 cm

Presszyklus : 30 Sekunden bei 1360,8 kg/204°C
            30 Sekunden bei 9072 kg/204°C.

Kühlzyklus : 60 Sekunden bei 4536 kg und Raumtemperatur

Die erhaltenen Laminate weisen eine Gesamtdicke von 1,9 mm auf. Sie werden hinsichtlich der Aluminium-Polymer- und Stahl-Polymer-Bindungen geprüft.

- 23 -

TABELLE 6

| Bindungsart | nach dem Laminieren | Abreissfestigkeit (N) | |
|---|---|---|---|
| | | nach 168 Stunden in kochender NaCl-Lösung | nach 31 Tage in Leitungs- wasser |
| Aluminium-Polymer | 146,9 | 109,5 | 139,7 |
| Stahl-Polymer | 546,0 | 325,7 | 341,8 |

Ein ähnliches Laminat wird hergestellt, mit dem Unterschied, dass eine 0,35 mm dicke verchromte, extrem starke Stahlplatte verwendet wird, und dass die Presszyklen je 30 Sekunden bei 362,9 kg und 3991,7 kg betragen.

Die erhaltenen Laminate weisen eine Gesamtdicke von 2 mm auf, und sie werden wie zuvor beschrieben geprüft.

TABELLE 7

| Bindungsart | nach dem Laminieren | Abreissfestigkeit (N) | |
|---|---|---|---|
| | | nach 168 Stunden in kochender NaCl-Lösung | nach 31 Tage in Leitungs- wasser |
| Aluminium-Polymer | 131,3 | 92,1 | 114,8 |
| Stahl-Polymer | 445,0 | 307,9 | 483,3 |

Beispiel 6: Es wird ein Polyolefingemisch enthaltend 44,5 Teile Propylen-Copolymer mit 6% Acrylsäure und 19% Aethylen (Copolymer II), 22,2 Teile Polyisobutylen und 33,3 Teile Russ wird hergestellt. Das Gemisch wird in einer Banbury-Mühle homogenisiert, anschliessend extrudiert, granulliert und getrocknet. Aus diesem Polymergemisch
sowie aus Aluminium- und Kupferplatten werden Metall-Polyolefin-
Metall-Laminate gemäss der in Beispiel 1 beschriebenen Methode
hergestellt. Die Laminate weisen eine Dicke von 1,5 mm auf. Sie
werden auf ihre Abreissfestigkeit hin getestet.

TABELLE 8

| Metallplatte | Abreissfestigkeit (N) | |
| --- | --- | --- |
| | nach dem Laminieren | nach 168 Stunden in kochender NaCl-Lösung |
| Aluminium; 0,12 mm dick; unbehandelt | 144,2 | 81,4 |
| Aluminium; 0,12 mm dick; im Chrombad* geätzt | 159,8 | 80,5 |
| Kupfer; 0,12 mm dick im Chrombad* geätzt | 167,8 | 111,7 |

* 250 g/l $CrO_3$, 25 g/l $H_2SO_4$, 150 Sekunden lang bei 43°C

Die Laminate weisen ferner einen elektrischen Widerstand von
4 Ohm/cm (senkrecht zu der Laminatebene) auf. Sie sind daher für die
Verwendung in elektrischen Geräten als elektrische Widerstände
geeignet, so z.B. in Heizapparate, Schaltern oder Batterien.

Patentansprüche

1. Laminate enthaltend zwei oder mehrere Metallplatten mit je einer thermoplastischen Schicht dazwischen, wodurch jeweils zwei benachbarte Metallplatten miteinander verbunden werden, dadurch gekennzeichnet, dass die thermoplastische Schicht

a) eine Mischung aus einem Propylen-Aethylen-Copolymer und einem Propylen-α,β ungesättigte Carbonsäure-Copolymer, oder

b) ein Propylen-Aethylen-α,β ungesättigtes Carbonsäure-Terpolymer, oder

c) eine Mischung aus einem oder mehreren der unter a) definierten Copolymere und einem Terpolymer b), oder

d) eine Mischung aus einem oder mehreren Polymeren wie unter a) bis c) genannt und einem Polyolefin enthält,

wobei in der thermoplastischen Schicht mindestens 60 Gew.-% Propylen, 2 bis 25 Gew.-% Aethylen und 0,8 bis 10 Gew.-% α,β-ungesättigte Carbonsäure vorhanden sind.

2. Laminate gemäss Anspruch 1, dadurch gekennzeichnet, dass die Metallplatten aus Eisen, Stahl, Aluminium, Kupfer, Nickel oder Messing bestehen.

3. Laminate gemäss Anspruch 1, dadurch gekennzeichnet, dass die Metallplatten mit Chromsäure geätzt sind.

4. Laminate gemäss Anspruch 1, dadurch gekennzeichnet, dass die Metallplatten mit Chrom oder mit einer Chrom/Chromoxid-Schicht überzogen sind.

5. Laminate gemäss Anspruch 4, dadurch gekennzeichnet, dass der Ueberzug eine Dicke von 0,01 bis 0,05μ aufweist.

6. Laminate gemäss Anspruch 1, dadurch gekennzeichnet, dass die α,ß-ungesättigte Carbonsäure Acrylsäure, Methacrylsäure, Crotonsäure, Maleinsäure, Fumarsäure oder ein Monoester der Malein- oder der Fumarsäure ist.

7. Laminate gemäss Anspruch 6, dadurch gekennzeichnet, dass die Säure Acrylsäure ist.

8. Laminate enthaltend zwei oder mehrere Metallplatten mit mindestens einer thermoplastischen Innenlage und einer thermoplastischen Schicht dazwischen, wobei durch letztere

    (i) jeweils eine Metallplatte mit einer benachbarten
        thermoplastischen Innenlage und

    (ii) jeweils zwei benachbarte Metallplatten miteinander
        verbunden werden,

worin die thermoplastische Schicht der Definition in Anspruch 1 entspricht, dadurch gekennzeichnet, dass die thermoplastische Innenlage

    (1) ein Polypropylen, oder

    (2) ein Propylen-Aethylen-Copolymer mit höchstens 30 Gew.-%
        Anteil an
        Aethylen, oder

    (3) eine Mischung der Polymere (1) und (2), oder

    (4) eine Mischung aus einem oder mehreren Polymeren wie unter
        (1) bis (3) genannt und höchstens 15 Gew.-% eines
        Elastomeren enthält,

wobei die thermoplastische Innenlage 10 bis 90% der Gesamtdicke des Laminates ausmacht.

9. Laminate gemäss den Ansprüchen 1 oder 8, dadurch gekennzeichnet, dass die thermoplastische Schicht Russ enthält.

10. Verfahren zur Verbindung von zwei Metallplatten, dadurch gekennzeichnet, dass man zwischen die Metallplatten eine thermoplastische Schicht gemäss Anspruch 1 legt und unter Erhitzen verpresst.

FO 7.3/PT/am*